# EUROPEAN PATENT APPLICATION

(11) **EP 4 598 098 A1**
(43) Date of publication of application: **06.08.2025**
(21) Application number: 23871348.1
(22) Date of filing: 29.06.2023
(51) Int. Cl.: H04W 24/02, H04W 92/04, H04W 88/08, H04W 88/18

(54) **CONTROL DEVICE FOR RADIO ACCESS NETWORK**

(30) Priority: 27.09.2022 JP 2022153230
(71) Applicant: KDDI Corporation, Tokyo 163-8003 (JP)
(72) Inventor: YONEKAWA, Kei, Fujimino-shi, Saitama 356-8502 (JP); TSUKAMOTO, Yuu, Fujimino-shi, Saitama 356-8502 (JP); SAITOU, Kazuhiro, Fujimino-shi, Saitama 356-8502 (JP); MURAMATSU, Shigeki, Fujimino-shi, Saitama 356-8502 (JP); SHINBO, Hiroyuki, Fujimino-shi, Saitama 356-8502 (JP); KUROKAWA, Mori, Fujimino-shi, Saitama 356-8502 (JP)
(74) Representative: Mathys & Squire
(86) International application number: PCT/JP2023/024201
(87) International publication number: WO 2024/070103

(57) **Abstract**

A non-real time control unit (Non-RT RIC), and a near-real time control unit (Near-RT RIC) are hierarchized, and AI/ML learning function (11, 12, 16) that generates a learning model on the basis of data collected from an O-RAN base station device 10, and a retraining function (14, 15, 19, 20) that detects concept drift on the basis of the data collected and causes the learning model to be retrained, are arranged in the non-real time control unit. Also, AI/ML inference function (13, 17, 18) that controls a radio access network on the basis of a result of inference by applying the newest data to the learning model and sends inference performance data to the retraining function in the near-real time control unit.

## Description

### TECHNICAL FIELD

The present invention relates to a control device for a radio access network, and particularly relates to a control device for a radio access network having a function for retraining a learning model generated by learning data collected from a radio access network.

### BACKGROUND ART

The O-RAN Alliance is currently advancing the development of specifications in radio access networks (RAN) for dividing the previously-integrated functions of base stations into a Centralized Unit (CU) that performs session processing, a Distributed Unit (DU) that performs baseband processing, and a Radio Unit (RU) that performs radio processing, and opening the specifications for the interfaces among those units.

In Beyond 5G systems, performance such as throughput, communication latency, the number of connections, and the like is increasing, and such systems are expected to provide a wide variety of services (e.g., robot control, connected cars, AR/VR, and the like). Meanwhile, artificial intelligence (Al)/machine learning (ML) are attracting attention as key technologies for realizing those services.

Non-Patent Literature (NPL) 1 and 2 discuss applying AI/ML in a variety of applications, such as beamforming control, radio resource allocation, traffic prediction, base station function arrangement, and the like in order to maximize network performance with the limited network resources of a RAN.

NPL 3 discloses a technique in which a learning model is generated through learning performed on the basis of data collected from a RAN, inference is performed using the data collected from the RAN and the learning model, and the RAN is then controlled according to the inference results.

However, as time passes, the environment changes, and the like, the characteristics of the data used for the inference may change from those of the data used in learning (concept drift), causing a drop in the inference performance of the model.

In response to such technical issues, the inventors of the present invention have proposed, and applied for a patent on, an AI system that accumulates and monitors data related to AI/ML learning and inference from O-RAN base station devices, detects concept drift, and performs retraining (Patent Literature (PTL) 1).

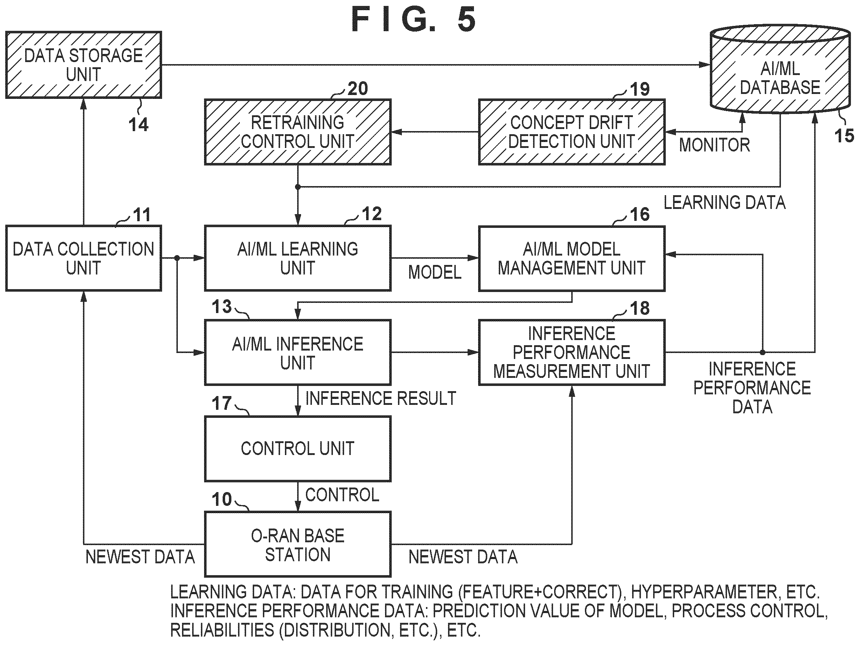

FIG. 5 is a function block diagram illustrating a conventional configuration of an AI system that detects concept drift and performs retraining.

A data collection unit 11 repeatedly collects the newest data from an O-RAN base station device 10, provides the collected newest data (collected data) to an AI/ML learning unit 12 and an AI/ML inference unit 13, and also accumulates that data in a data storage unit 14. The collected data accumulated in the data storage unit 14 is managed in an AI/ML database 15. The AI/ML learning unit 12 generates a learning model for learning the collected data and controlling the O-RAN base station device 10.

An AI/ML model management unit 16 manages learning models previously generated by the AI/ML learning unit 12. The AI/ML inference unit 13 performs inference based on the collected data newly collected by the data collection unit 11 and the learning model, and outputs an inference result to a control unit 17 and an inference performance measurement unit 18. The control unit 17 controls the O-RAN base station device 10 on the basis of the inference result.

The inference performance measurement unit 18 determines an inference performance on the basis of (i) the newest data collected after the control unit 17 has controlled the O-RAN base station device 10 on the basis of the inference result and (ii) that inference result, and stores inference performance data indicating the determined inference performance in the AI/ML database 15.

A concept drift detection unit 19 periodically obtains at least one of the collected data and the inference performance data from the AI/ML database 15, and determines whether concept drift is occurring. Upon detecting concept drift, the concept drift detection unit 19 instructs a retraining control unit 20 to generate a new learning model (perform retraining). The retraining control unit 20 provides data for retraining to the AI/ML learning unit 12 and instructs the retraining to be performed.

When retraining is instructed, the AI/ML learning unit 12 generates a new learning model on the basis of the collected data newly collected by the data collection unit 11, and outputs that learning model to the AI/ML model management unit 16. The AI/ML model management unit 16 compares the current learning model used by the AI/ML inference unit 13 with the new learning model, and outputs the new learning model to the AI/ML inference unit 13 if the new learning model provides better inference performance than the current learning model.

The AI/ML inference unit 13 performs inference thereafter using the new learning model. Note that if the new learning model provides worse inference performance than the current learning model, the AI/ML model management unit 16 can instruct the AI/ML learning unit 12 to perform retraining.

### CITATION LIST

### PATENT LITERATURE

PTL 1: Japanese Patent Application No. 2022-046347

### NON-PATENT LITERATURE

NPL 1: M. E. Morocho-Cayamcela, H. Lee and W. Lim, "Machine Learning for 5G/B5G Mobile and Wireless Communications: Potential, Limitations, and Future Directions," in IEEE Access, vol. 7, pp. 137184-137206, 2019.
NPL 2: J. Kaur, M. A. Khan, M. Iftikhar, M. Imran and Q. Emad Ul Haq, "Machine Learning Techniques for 5G and Beyond," in IEEE Access, vol. 9, pp. 23472-23488, 2021.
NPL 3: O-RAN Alliance, "AI/ML workflow description and requirements," O-RAN.WG2.AIML-v01.03, Jul. 2021.
NPL 4: Hendrycks, D. and Gimpel, K. 2017. A BASELINE FOR DETECTING MISCLASSIFIED AND OUT-OF-DISTRIBUTION EXAMPLES IN NEURAL NETWORKS. ICLR. (2017).
NPL 5: Hendrycks, D. and Dietterich, T. 2019. DEEP ANOMALY DETECTION WITH OUTLIER EXPOSURE. ICLR. (2019).
NPL 6: Liang, S., Li, Y. and Srikant, R. 2018. ENHANCING THE RELIABILITY OF OUT-OF-DISTRIBUTION IMAGE DETECTION IN NEURAL NETWORKS. ICLR. (2018).
NPL 7: Lee, K., Lee, K., Lee, H. and Shin, J. 2018. A simple unified framework for detecting out-of-distribution samples and adversarial attacks. NeurIPS. (2018).
NPL 8: Liu, W., Wang, X., Owens, J.D. and Li, Y. 2020. Energy-based Out-of-distribution Detection. NeurIPS. (2020).
NPL 9: Huang, R., Geng, A. and Li, Y. 2021. On the Importance of Gradients for Detecting Distributional Shifts in the Wild. NeurIPS (2021).

### SUMMARY OF INVENTION

### TECHNICAL PROBLEM

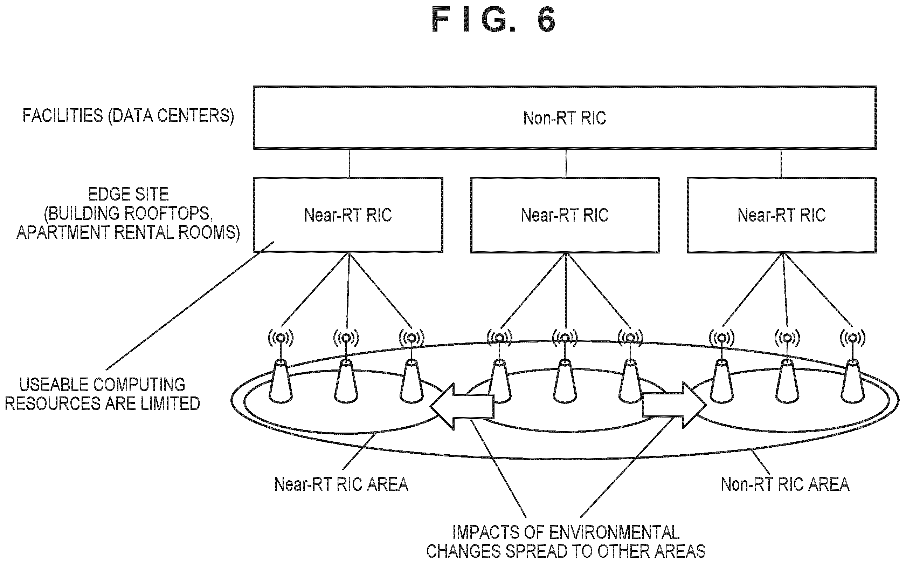

As indicated in FIG. 6, RAN Intelligent Controllers (RICs), which handle the control and optimization of RAN functions, have a hierarchical structure including a "Non-Real Time (RT) RIC", which is a non-real-time component, and "Near-RT RICs", which are near-real time components, and these components have different control periods.

Here, the RICs have different characteristics, namely that the control period of the Non-RT RIC is at least 1 sec, providing a broad control window, whereas the control period of the Near-RT RIC is 10 msec to 1 sec, for a narrow control window. As such, the optimal arrangements of function blocks in the Near-RT RIC and the Non-RT RIC with respect to AI/ML have been a subject of investigation.

Non-RT RICs are often installed in facilities (data centers), and Near-RT RICs are often installed at edge sites (building rooftops, apartment rental rooms, and the like). Accordingly, if functions pertaining to AI/ML learning are provided in a Non-RT RIC and functions pertaining to AI/ML inference are provided in a Near-RT RIC, a highly-versatile learning model can be generated through learning using a wide range of data in the coverage area of the facility. Furthermore, the inference can also be performed at each edge site, which makes it possible to reduce the processing load at the edge sites.

However, the following technical issues may arise if both the functions pertaining to AI/ML learning and the functions pertaining to retraining of the learning model are provided in the Near-RT RIC in order to prioritize real-time performance.

First, the processing load on the Near-RT RIC will increase. In other words, edge sites have power and space constraints, and it is therefore not possible to provide ample computing resources.

Second, only information under the Near-RT RIC can be used to detect concept drift. In other words, the information of adjacent areas cannot be used, which delays the detection of concept drift.

However, effects such as the following can be anticipated if all functions pertaining to retraining are provided in the Non-RT RIC.

First, the processing load on the Near-RT RIC can be lightened, and retraining can be performed even if the edge site has limited computing resources.

Second, the information under the Non-RT RIC can be used to detect concept drift, which makes it possible to better adapt to environmental changes.

However, to implement retraining based on concept drift detection having provided the Non-RT RIC with all functions pertaining to retraining, it is necessary to send data about the inference performance of the learning model from the Near-RT RIC to the Non-RT RIC. To that end, using the A1/O1 interface is conceivable.

However, interface specifications for performance indicators of a learning model are not defined in the O1 interface. Although an interface is defined for performance indicators for base stations based on the 3GPP (registered trademark) specifications, that interface cannot be used as is for inference performance data of the learning model. Interface specifications for performance indicators of a learning model are not defined in the A1 interface.

### SOLUTION TO PROBLEM

An object of the present invention is to address the technical issues described above by providing a control device for a radio access network capable of implementing retraining based on concept drift detection having provided all functions pertaining to retraining of a learning model in a Non-RT RIC.

To achieve the object described above, the present invention provides a control device for a radio access network in which a non-real time control unit and a near-real time control unit are hierarchized. The control device includes: a learning unit that generates a learning model on the basis of data collected from the radio access network; an inference unit that controls the radio access network on the basis of a result of inference by applying the data collected to the learning model; and a retraining unit that detects concept drift on the basis of the data collected, and causes the learning unit to retrain the learning model when the concept drift is detected. The inference unit is provided in the near-real time control unit, and the learning unit and the retraining unit are provided in the non-real time control unit.

### ADVANTAGEOUS EFFECTS OF INVENTION

According to the present invention, only functions pertaining to AI/ML inference are provided in the near-real time control unit, and functions pertaining to AI/ML learning and functions pertaining to retraining are provided in the non-real time control unit. The following effects are therefore achieved.
(1) The functions pertaining to AI/ML learning can be trained using a wide range of data within the coverage area of the facility, and a highly versatile learning model can therefore be generated.
(2) The AI/ML inference can be performed at each edge site, which lightens the processing load on the edge site.
(3) All the functions pertaining to retraining are provided in the non-real time control unit, and thus the processing load on the near-real time control unit can be lightened, and retraining can be performed even if the edge site has limited computing resources.
(4) The information under the non-real time control unit can be used to detect concept drift, which makes it possible to better adapt to environmental changes.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a function block diagram illustrating the configuration of the main parts of an O-RAN control device according to one embodiment of the present invention.
FIG. 2 is a diagram illustrating a method for specifying an indicator when requesting inference performance data.
FIG. 3 is a diagram illustrating an example of sending inference performance data in table format.
FIG. 4 is a sequence flow illustrating operations according to the present invention.
FIG. 5 is a function block diagram illustrating a conventional configuration of an AI system that detects concept drift and performs retraining.
FIG. 6 is a function block diagram illustrating a RAN Intelligent Controller (RIC).

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

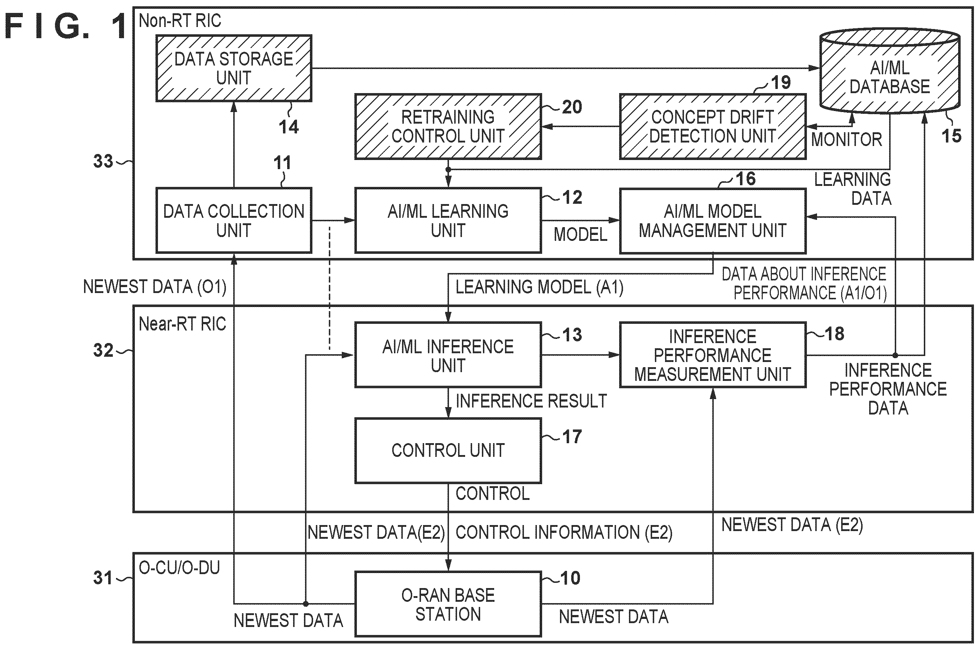

FIG. 1 is a function block diagram illustrating the configuration of the main parts of an O-RAN control device according to one embodiment of the present invention. Here, configurations not needed for the description of the present invention are not shown. The same reference signs as those mentioned above indicate the same or equivalent parts. The present embodiment is characterized in that functions pertaining to AI/ML inference are provided in a Near-RT RIC, and functions pertaining to AI/ML learning and learning model retraining are provided in a Non-RT RIC.

The O-RAN control device is constituted by an O-CU/O-DU, a Near-RT RIC, and a Non-RT RIC, and the functions can communicate with one another over various interfaces, including the O1 interface, the A1 interface, and the E2 interface defined by the O-RAN Alliance. The O-RAN base station device 10 is provided in the O-CU/O-DU.

An AI/ML inference unit 13, a control unit 17, and an inference performance measurement unit 18 are provided in the Near-RT RIC as main functions pertaining to AI/ML inference. In the Non-RT RIC, a data collection unit 11, an AI/ML learning unit 12, and an AI/ML model management unit 16 are provided as main functions pertaining to AI/ML learning, and a data storage unit 14, an AI/ML database 15, a concept drift detection unit 19, and a retraining control unit 20 are provided as main functions pertaining to retraining.

In the Non-RT RIC, the data collection unit 11 collects the newest data from the O-RAN base station device 10 of the O-CU/O-DU through the O1 interface, and provides that data to the data storage unit 14 and the AI/ML learning unit 12. The newest data is managed in the AI/ML database 15. A learning model generated by the AI/ML learning unit 12 on the basis of the collected data is registered with an AI/ML management unit 16 and provided to the AI/ML inference unit 13 of the Near-RT RIC through the A1 interface.

In the Near-RT RIC, the AI/ML inference unit 13 provides an inference result obtained by applying the newest data to the learning model obtained through the A1 interface to the control unit 17 and the inference performance measurement unit 18. The inference performance measurement unit 18 sends the inference performance data to the AI/ML database 15 and the AI/ML management unit 16 of the Non-RT RIC through an A1/O1 interface.

In the Non-RT RIC, when the concept drift detection unit 19 detects concept drift, the retraining control unit 20 instructs the AI/ML learning unit 12 to retrain the learning model. The retrained learning model is updated and registered with the AI/ML management unit 16 and provided to the AI/ML inference unit 13 of the Near-RT RIC through the A1 interface.

In this manner, in the present embodiment, the functions pertaining to AI/ML learning, AI/ML inference, and retraining of the learning model are distributed between the Near-RT RIC and the Non-RT RIC, and thus the following two messages (a) and (b) are added for the purpose of exchanging information on retraining between the Near-RT RIC and the Non-RT RIC.
(a) Requesting the inference performance data
(b) Sending the requested inference performance data

Here, the following three items of information (1) to (3) are specified in the (a) request for the inference performance data.

### (1) Inference performance data

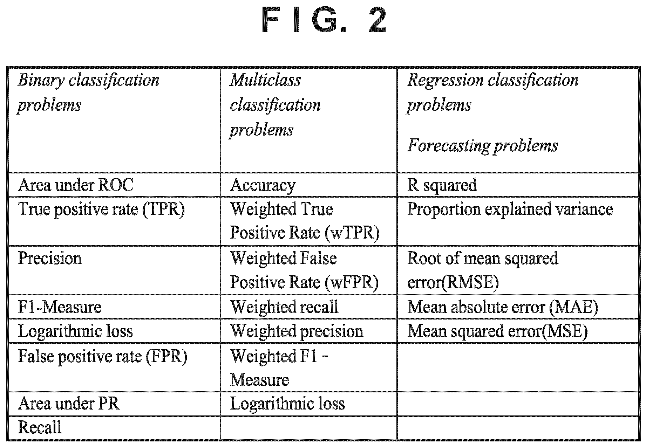

The indicators illustrated in FIG. 2 are listed in O-RAN WG2 as indicators pertaining to the inference performance of AI/ML, and at least one indicator is designated. These indicators specify indicators for binary classification problems, indicators for multiclass classification problems, and indicators for regression classification problems. In the present embodiment, an average value, a median value, or the like for a specified period of time can be obtained.

### (2) Target

A target learning model for obtaining the inference performance data is specified.

### (3) Data obtainment interval

An interval for obtaining the inference performance data is specified.

Incidentally, although the indicators illustrated in FIG. 2 are all indicators that use correct data (true values), there are cases where correct data is not obtained from the system. Accordingly, the present embodiment makes it possible to also select an inference performance indicator when correct data cannot be obtained, as will be described below.

In general, the performance of a model drops with out-of-distribution (OOD) data. Accordingly, an OOD score based on a trained model is added as an inference performance indicator when correct data cannot be obtained.

For a multiclass classification problem, the Maximum over Softmax Probabilities (MSP) disclosed in NPL 4, the Outlier Exposure disclosed in NPL 5, or the ODIN disclosed in NPL 6 can be designated as a maximum value when the output of the trained model is normalized in the class direction using softmax.

Additionally, as with Mahalanobis as disclosed in NPL 7, it is also possible to calculate a Gaussian distribution of a feature for each of classes using the second-to-last feature and label of the trained model, and label the class for which the Mahalanobis distance is the smallest with a negative sign on the Mahalanobis distance.

Additionally, as with Energy as disclosed in NPL 8, it is also possible to negatively label free energy when an energy function is assumed to be the negatively-labeled output of a trained model.

Furthermore, as with GradNorm disclosed in NPL 9, it is also possible to specify the norm of the gradient when backpropagating the KLD between the softmax output of a trained model and a uniform distribution.

On the other hand, for a binary classification problem, it is possible to specify indicators for a multiclass classification problem.

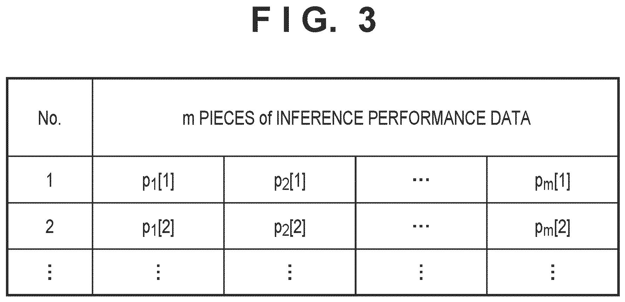

With regard to (b) sending the inference performance data, in the present embodiment, inference performance data (p1 to pm), for m indicators designated in the (1) request for information to the AI/ML database, is sent for each learning model (No.), in table format and at a specified time interval, as illustrated in FIG. 3.

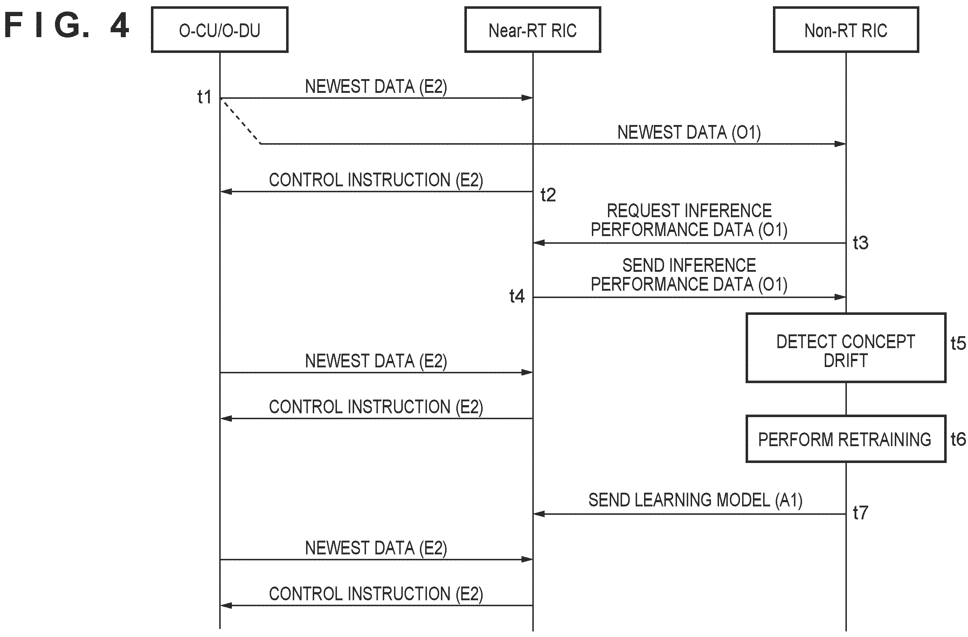

FIG. 4 is a sequence flow illustrating operations according to the present embodiment. The descriptions given here will focus on the communication between the O-CU/O-DU, the Near-RT RIC, and the Non-RT RIC. In the present embodiment, the communication between the O-CU/O-DU and the Near-RT RIC is performed through the E2 interface, and the communication between the Near-RT RIC and the Non-RT RIC is performed through the O1 interface or the A1 interface.

The O-CU/O-DU repeatedly sends the newest data of the O-RAN base station device 10 to the Near-RT RIC and the Non-RT RIC in a predetermined period. In the present embodiment, the O-CU/O-DU sends the newest data to the Near-RT RIC through the E2 interface, and to the Non-RT RIC through the O1 interface, at time t1. In the Non-RT RIC, the newest data is obtained by the data collection unit 11.

In the Near-RT RIC, the AI/ML inference unit 13 performs inference by applying the newest data to the current learning model, and communicates the inference result to the control unit 17 and the inference performance measurement unit 18. The control unit 17 instructs the O-RAN base station device 10 of the O-CU/O-DU to perform control based on the inference result through the E2 interface at time t2.

The Non-RT RIC requests the inference performance data from the Near-RT RIC in a predetermined period. In the present embodiment, when, at time t3, the AI/ML model management unit 16 of the Non-RT RIC requests the inference performance data from the Near-RT RIC through the O1 interface, at time t4, in the Near-RT RIC, the inference performance measurement unit 18 sends the inference performance data measurement result to the Non-RT RIC through the O1 interface in table format as a response to the request.

In the Non-RT RIC, the concept drift detection unit 19 measures concept drift on the basis of the inference performance data and data stored in the AI/ML database 15. When concept drift is detected at time t5, at time t6, the retraining control unit 20 instructs the AI/ML learning unit 12 to perform retraining. The AI/ML learning unit 12 performs retraining and generates a learning model, which is updated and registered in the AI/ML model management unit 16.

At time t7, the retrained learning model is sent from the AI/ML model management unit 16 of the Non-RT RIC to the AI/ML inference unit 13 of the Near-RT RIC through the A1 interface. Accordingly, each time the newest data is collected thereafter, control based on the retrained learning model is performed.

According to the present embodiment, functions pertaining to AI/ML inference are provided in the Near-RT RIC, whereas functions pertaining to AI/ML learning and retraining are provided in the Non-RT RIC. This makes it possible to reduce the processing load on the Near-RT RIC. Accordingly, in environments where edge site computing resources are limited and concept drift does not occur frequently, the concept drift can be detected with good response time, which makes it possible to improve the adaptability to environmental changes.

As a result, the embodiment makes it possible to contribute to Goal 9 of the United Nations-led Sustainable Development Goals (SDGs), which is to "build resilient infrastructure, promote inclusive and sustainable industrialization, and foster innovation", and Goal 11, which is to "make cities inclusive, safe, resilient, and sustainable".

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-153230, filed September 27, 2022, which is hereby incorporated by reference herein.

## Claims

1. A control device for a radio access network in which a non-real time control unit and a near-real time control unit are hierarchized, the control device comprising:
a learning unit that generates a learning model on the basis of data collected from the radio access network;
an inference unit that controls the radio access network on the basis of a result of inference by applying the data collected to the learning model; and
a retraining unit that detects concept drift on the basis of the data collected, and causes the learning unit to retrain the learning model when the concept drift is detected,
wherein the inference unit is provided in the near-real time control unit, and the learning unit and the retraining unit are provided in the non-real time control unit.

2. The control device for a radio access network according to claim 1,
wherein the inference unit includes inference performance measuring means for measuring an inference performance on the basis of the data collected and the result of the inference,
the retraining unit includes concept drift detecting means for detecting the concept drift on the basis of the inference performance, and retraining control means for causing the learning unit to retrain the learning model when the concept drift is detected,
the non-real time control unit makes a request for inference performance data to the near-real time control unit through an O1 interface,
the near-real time control unit sends the inference performance data to the non-real time control unit through the O1 interface in response to the request, and
the non-real time control unit sends the learning model retrained to the near-real time control unit through the O1 interface or an A1 interface.

3. The control device for a radio access network according to claim 2,
wherein the request for the inference performance data includes a designation of each of an indicator of the inference performance, a target learning model, and a data obtainment interval.

4. The control device for a radio access network according to claim 3,
wherein the near-real time control unit sends the requested inference performance data in table format in which data of each indicator designated is written for each learning model designated.

5. The control device for a radio access network according to claim 3 or 4,
wherein the indicator of the inference performance includes an out-of-distribution score based on a trained model.
